# EUROPEAN PATENT APPLICATION

(11) **EP 4 459 474 A1**
(43) Date of publication of application: **06.11.2024**
(21) Application number: 22914466.2
(22) Date of filing: 21.12.2022
(51) Int. Cl.: G06F 13/20

(54) **DATA TRANSMISSION METHOD AND APPARATUS, AND DEVICE AND MEDIUM**

(30) Priority: 29.12.2021 CN 202111637732
(71) Applicant: Beijing Co Wheels Technology Co., Ltd., Beijing 101300 (CN)
(72) Inventor: LIU, Jiafu, Beijing 101300 (CN); XU, Yingchun, Beijing 101300 (CN)
(74) Representative: advotec.
(86) International application number: PCT/CN2022/140836
(87) International publication number: WO 2023/125212

(57) **Abstract**

Provided are a data transmission method and apparatus, and a device and a medium. The data transmission method comprises: receiving a data packet to be transmitted, wherein said data packet comprises data to be transmitted and chip identification information; determining, from among a plurality of first PCIE physical layer ports, a target first PCIE physical layer port corresponding to the chip identification information, wherein the plurality of first PCIE physical layer ports are interconnected to a plurality of chips in one-to-one correspondence; distributing said data packet to the target first PCIE physical layer port; and sending said data packet to a receiving chip by means of the target first PCIE physical layer port, wherein the receiving chip is a chip that is interconnected to the target first PCIE physical layer port.

## Description

### CROSS-REFERENCE TO RELATED APPLICATION

This application is based on and claims priority to Chinese Patent Application No. 202111637732.8 filed on December 29, 2021, the entire content of which is incorporated herein by reference.

### TECHNICAL FIELD

The disclosure relates to the field of information technologies, and specifically to a data transmission method, a data transmission apparatus, a data transmission device, and a medium.

### BACKGROUND

With the field development of information technologies, a plurality of chips may be used to cooperate to process data currently, for example, it may be applied to a vehicle environment to solve a problem of big data interaction.

However, at current, only the high-speed mutual transmission between two chips may be realized. When it comes to the data processing cooperation among three or more chips (that is, the number of chips is greater than or equal to 3), the mutual data transmission may not be directly performed among the plurality of chips, which affects the efficiency of data transmission among the plurality of chips.

### SUMMARY

A data transmission method, a data transmission apparatus, a data transmission device, a medium, a computer program product, and a computer program are provided according to the disclosure.

According to a first aspect, a data transmission method is provided according to some embodiments of the disclosure and includes: receiving a data packet to be transmitted, the data packet to be transmitted including data to be transmitted and chip identification information; determining a target first peripheral component interconnect express (PCIE) physical layer port corresponding to the chip identification information from a plurality of first PCIE physical layer ports, the plurality of first PCIE physical layer ports and a plurality of chips being interconnected one to one; distributing the data packet to be transmitted to the target first PCIE physical layer port; and transmitting the data packet to be transmitted to a receiving chip through the target first PCIE physical layer port, the receiving chip being a chip interconnected with the target first PCIE physical layer port.

According to a second aspect, a data transmission method is provided according to some embodiments of the disclosure and includes: receiving a data packet to be transmitted by a target second PCIE physical layer port, the target second PCIE physical layer port being a port interconnected with a transmitting chip in a plurality of second PCIE physical layer ports, the plurality of second PCIE physical layer ports and a plurality of chips being interconnected one to one, the data packet to be transmitted including data to be transmitted and chip identification information; and in response to determining that the chip identification information is the same as local chip identification information, transmitting the data packet to be transmitted to a local user layer.

According to a third aspect, a data transmission apparatus is provided according to some embodiments of the disclosure and includes: a first data packet receiving module, configured to receive a data packet to be transmitted, the data packet to be transmitted including data to be transmitted and chip identification information; a first port determining module, configured to determine a target first PCIE physical layer port corresponding to the chip identification information from a plurality of first PCIE physical layer ports, the plurality of first PCIE physical layer ports and a plurality of chips being interconnected one to one; a data packet distributing module, configured to distribute the data packet to be transmitted to the target first PCIE physical layer port; and a first packet transmitting module, configured transmit the data packet to be transmitted to a receiving chip through the target first PCIE physical layer port, the receiving chip being a chip interconnected with the target first PCIE physical layer port.

According to a fourth aspect, a data transmission apparatus is provided according to some embodiments of the disclosure and includes: a second data packet transmitting module, configured to receive a data packet to be transmitted by a target second PCIE physical layer port, the target second PCIE physical layer port being a port interconnected with a transmitting chip in a plurality of second PCIE physical layer ports, the plurality of second PCIE physical layer ports and a plurality of chips being interconnected one to one, the data packet to be transmitted including data to be transmitted and chip identification information; and a second data packet receiving module, configured to, in response to determining that the chip identification information is the same as local chip identification information, transmit the data packet to be transmitted to a local user layer.

According to a fifth aspect, a data transmission device is provided according to some embodiments of the disclosure and includes: a processor; and a memory for storing executable instructions. The processor is configured to read the executable instruction from the memory and execute the executable instruction to perform the data transmission method according to the first aspect or the second aspect.

According to a sixth aspect, a computer-readable storage medium is provided according to some embodiments of the disclosure and stores a computer program, and when the computer program is executed by a processor, the processor performs the data transmission method according to the first aspect or the second aspect.

According to a seventh aspect, a computer program product is provided according to some embodiments of the disclosure and includes a computer program, in which when the computer program is executed by a processor, the processor performs the data transmission method according to the first aspect or the second aspect.

According to an eighth aspect, a computer program is provided according to some embodiments of the disclosure and includes computer program code, and when the computer program code runs on a computer, the computer is caused to perform the data transmission method according to the first aspect or the second aspect.

Compared with the related art, the technical solutions according to the embodiments of the disclosure have the following advantages.

According to the data transmission method, the data transmission apparatus, the data transmission device, the medium, the computer program product, and the computer program according to the embodiments of the disclosure, the plurality of first PCIE physical layer ports and the plurality of chips may be interconnected one to one, so when performing the data transmission, the target first PCIE physical layer port corresponding to the chip identification information in the data packet to be transmitted is determined and the data may be transmitted to the receiving chip through the target first PCIE physical layer port. The first PCIE physical layer ports are interconnected with the chips in the one-to-one correspondence, which may realize the direct and high-bandwidth mutual information transmission among the plurality of chips, thereby improving the data transmission efficiency among the plurality of chips.

### BRIEF DESCRIPTION OF THE DRAWINGS

The above and other features, advantages, and aspects according to various embodiments of the disclosure will become more apparent with reference to the following detailed description in conjunction with the accompanying drawings. Throughout the accompanying drawings, the same or similar reference numerals denote the same or similar elements. It should be understood that the accompanying drawings are schematic and the elements in the accompanying drawings and original components are not necessarily drawn to scale.
FIG. 1 illustrates a schematic diagram of a data transmission architecture according to some embodiments of the disclosure;
FIG. 2 illustrates a schematic diagram of another data transmission architecture according to some embodiments of the disclosure;
FIG. 3 illustrates a schematic flowchart of a data transmission method according to some embodiments of the disclosure;
FIG. 4 illustrates a schematic flowchart of another data transmission method according to some embodiments of the disclosure;
FIG. 5 illustrates a schematic flowchart of another data transmission method according to some embodiments of the disclosure;
FIG. 6 illustrates a schematic flowchart of another data transmission method according to some embodiments of the disclosure;
FIG. 7 illustrates a schematic block diagram of a data transmission apparatus according to some embodiments of the disclosure;
FIG. 8 illustrates a schematic block diagram of another data transmission apparatus according to some embodiments of the disclosure; and
FIG. 9 is a schematic block diagram of a data transmission device according to some embodiments of the disclosure.

### DETAILED DESCRIPTION

Reference will be made in detail below to embodiments of the disclosure with reference to the accompanying drawings. Although some embodiments of the disclosure are illustrated in the accompanying drawings, it should be understood that the disclosure may be implemented in various forms and should not be construed as limited to the embodiments set forth herein. Instead these embodiments are used for a more thorough and complete understanding of the disclosure. It should be understood that the accompanying drawings and embodiments of the disclosure are for exemplary purposes only and are not intended to limit the scope of the disclosure.

It should be understood that various steps described in the method implementations of the disclosure may be executed in different orders and/or in parallel. Also, the method embodiments may include additional steps and/or steps not illustrated. The scope of the disclosure is not limited in this regard.

The term "comprise/include" and its variations, used herein, are open-ended, i.e. "comprising/including but not limited to". The term "according to" is "according at least in part to". The term "an embodiment" means "at least one embodiment"; the term "another embodiment" means "at least another embodiment"; the term "some embodiments" means "at least some embodiments", and the like. Relevant definitions of other terms will be given in the description below.

It should be noted that concepts such as "first" and "second" mentioned in the disclosure are only used to distinguish different devices, modules, or units, and are not used to limit the sequence of functions performed by these devices, modules, or units or the interdependence of functions performed by these devices, modules, or units.

It should be noted that "a" and "a plurality of or multiple" mentioned in the disclosure are illustrative and not restrictive, and those skilled in the art should understand that unless the context clearly indicates otherwise, they should be understood as "one or more".

The names of messages or information exchanged among the plurality of devices according to embodiments of the disclosure are used for the illustrative purposes only and are not used to limit the scope of these messages or information.

To solve the above-mentioned problem, a data transmission device, a data transmission apparatus, a data transmission device, and a medium are provided according to embodiments of the disclosure, which may realize the direct and high-bandwidth information transmission among the plurality of chips by using the plurality of PCIE physical layer ports interconnected with the plurality of chips one-to-one. The data transmission efficiency among the plurality of chips may be improved, such as the high-speed data transmission in the multiple chip (multi-chip) big data interaction scenario. A high-speed multi-chip Serializer/Deserializer (SerDer) technology may be realized according to an idea of an Ethernet switch and a high-speed data transmission idea of the PCIE protocol.

In the following, the data transmission method according to some embodiments of the disclosure will be firstly described.

To facilitate the overall understanding of the data transmission solutions according to embodiments of the disclosure, before introducing the data transmission method, the data transmission apparatus, the data transmission device, and the medium according to embodiments of the disclosure, the data transmission architecture will be described in detail with reference to the accompanying drawings.

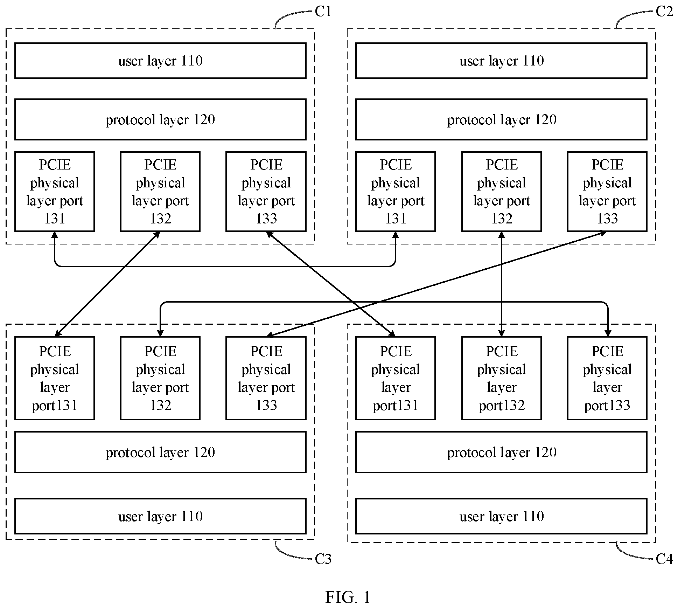

FIG. 1 illustrates a schematic diagram of a data transmission architecture according to some embodiments of the disclosure. As illustrated in FIG. 1, in a multi-chip data interaction scenario, the data transmission architecture of each chip may include a user layer 110, a protocol layer 120, and a plurality of PCIE physical layer ports. For example, taking the data interaction among 4 chips C1-C4 as an example, each chip may include 3 PCIE physical layer ports. The 3 PCIE physical layer ports may be interconnected with the remaining 3 chips one to one. For example, for chip C 1, its PCIE physical layer port 131 may be interconnected with the PCIE physical layer port 131 of chip C2, and its PCIE physical layer port 132 may be interconnected with the PCIE physical layer port 131 of chip C3, and its PCIE physical layer port 133 may be interconnected with the PCIE physical layer port 131 of chip C4. Correspondingly, any two chips may perform the bidirectional data interaction through the PCIE physical layer ports interconnected between them. For example, chip C 1 and chip C2 may transmit information to each other through their respective PCIE physical layer ports 131. It should be noted that the number of interconnected chips is not limited to 4, but may also be 3 or more. The number of interconnected chips may be set according to actual scenarios and specific needs, which is not limited in detail herein.

For example, when it is necessary to transmit data from chip C1 to chip C4, the user layer 110 of chip C1 may generate a data packet to be transmitted according to data to be transmitted input by the user and chip identification information of chip C4. The user layer 110 of chip C1 transmits the data packet to be transmitted to the protocol layer 120 of chip C1. The protocol layer 120 of chip C1 determines the PCIE physical layer port interconnected with chip C4 among the plurality of PCIE physical layer ports of chip C1 through the chip identification information of chip C4 in the data packet to be transmitted, that is, the PCIE physical layer port 133 of chip C1. The data packet to be transmitted is transmitted to the PCIE physical layer port 131 of chip C4 by the PCIE physical layer port 133 of chip C1, so that the direct and high-bandwidth mutual information transmission among the plurality of chips may be realized through the plurality of PCIE physical layer ports interconnected with the plurality of chips one to one, which improves the data transmission efficiency among the plurality of chips.

For another example, after chip C1 transmits the data packet to be transmitted to the PCIE physical layer port 131 of chip C4 through its PCIE physical layer port 133, the PCIE physical layer port 131 of chip C4 uploads the received data packet to be transmitted to the protocol layer 120. The protocol layer 120 of chip C4 judges whether the chip identification information in the data packet to be transmitted is the same as the chip identification information of chip C4. If they are the same, the protocol layer 12 of chip C4 continues to transmit the data packet to be transmitted to the user layer of chip C4, so that the direct and high-bandwidth mutual information transmission among the plurality of chips may be realized through the plurality of PCIE physical layer ports interconnected with the plurality of chips one to one, which improves the data transmission efficiency among the plurality of chips.

According to some embodiments, continuing the previous example, if the protocol layer 120 of chip C4 determines that the chip identification information in the data packet to be transmitted is different from the chip identification information of chip C4, for example, the chip identification information in the data packet to be transmitted is the chip identification information of chip C3, the protocol layer 120 of chip C4 may distribute the data packet to be transmitted to the PCIE physical layer port 133 of chip C4 (that is, the physical layer port interconnected with chip C3), so that the PCIE physical layer port 133 of chip C4 may transmit the data packet to be transmitted to the PCIE physical layer port 132 of chip C3, so that the high-speed data forwarding may be realized.

It should be noted that the PCIE physical layer ports 131 to 133 according to embodiments of the disclosure may be ports encapsulated with PCIE physical layers, so as to realize the high-speed SerDer data transmission.

It should be noted that, for the above user layer, the user may define the data to be transmitted and the chip identification information of the receiving chip for the data to be transmitted at this layer.

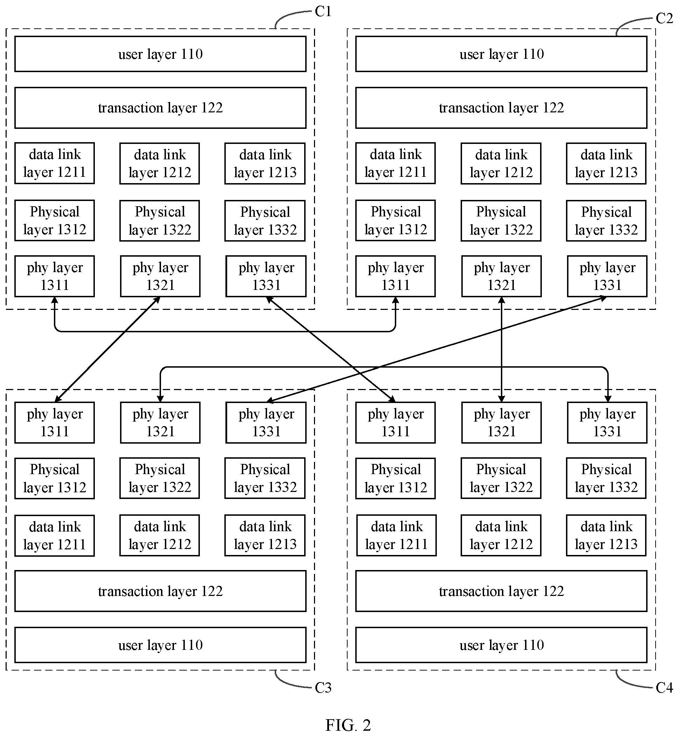

According to some embodiments, the PCIE physical layer port may include two physical layers. For example, FIG. 2 illustrates a schematic diagram of another data transmission architecture according to some embodiments of the disclosure. As illustrated in FIG. 2, each PCIE physical layer port includes a first physical layer (phy layer) and a second physical layer (Physical layer). For example, the PCIE physical layer port 131 may include a phy layer 1311 and a Physical layer 1312, the PCIE physical layer port 132 may include a phy layer 1321 and a Physical layer 1322, and the PCIE physical layer port 133 may include a phy layer 1331 and a Physical layer 1332.

It should be noted that the phy layer and the Physical layer may mainly implement the functions of the physical coding sublayer (PCS), the physical medium attachment (PMA) sublayer, and the physical medium dependent (PMD) sublayer, and coding and transmission between the digital signal and the analog signal.

It should be noted that the PMD sublayer may be an electrical block responsible for serial signal transmission. The PMA sublayer may be responsible for serialization/deserialization. The PCS sublayer may be responsible for coding/decoding of data streams.

According to some embodiments, the protocol layer 120 may include a data link layer and a transaction layer. The data link layer may perform the data interaction with one or more PCIE physical layer ports. For example, the plurality of data link layers corresponds to the plurality of PCIE physical layer ports one-to-one, or a data link layer that performs the data transmission with the plurality of PCIE physical layer ports, which is not limited herein.

For example, referring to FIG. 2, the protocol layer 120 includes three data link layers 1211 to 1213 and a transaction layer 122. Each data link layer corresponds to one PCIE physical layer port. For example, the data link layer 1211 corresponds to the phy layer 1311 and the physical layer 1312 of the PCIE physical layer port 131.

For example, the data link layer 1211 may receive the data packet to be transmitted from the PCIE physical layer port 131, and after performing the data alignment on the data packet to be transmitted, transmit the aligned data packet to be transmitted to the transaction layer 122, so that the function of the original bitstream transmitted by the physical layer port 122 may be strengthened. Similarly, other data link layers may perform the data alignment on their corresponding physical layer ports, which will not be repeated herein.

For another example, the data link layer 1211 may receive the data packet to be transmitted from the transaction layer 122, and after performing the data alignment on the data packet to be transmitted, transmit the aligned data packet to be transmitted to the PCIE physical layer port corresponding to the chip identification information, so that the function of the original bitstream transmitted by the physical layer port may be enhanced. Similarly, other data link layers may perform the data alignment on the transaction layers, which will not be repeated herein.

For another example, the data link layer 1212 may detect an error on the PCIE physical layer port 132. In detail, an error-prone physical link provided by the PCIE physical layer port may be corrected to the logically error-free data link, thereby improving the data transmission stability. Similarly, other data link layers may detect the error on their corresponding PCIE physical layer ports, which will not be repeated herein.

It should be noted that the above data link layer may be used to establish the data link with other chip, and perform the data transmission between the PCIE physical layer port and the transaction layer.

It should be noted that the above-mentioned transaction layer may deal with the transmission transaction, for example, encapsulating or de-encapsulating a certain data packet so that its upper layer or lower layer may further process the data packet, and interweaving and distributing data between the plurality of PCIE physical layer ports and the user layer.

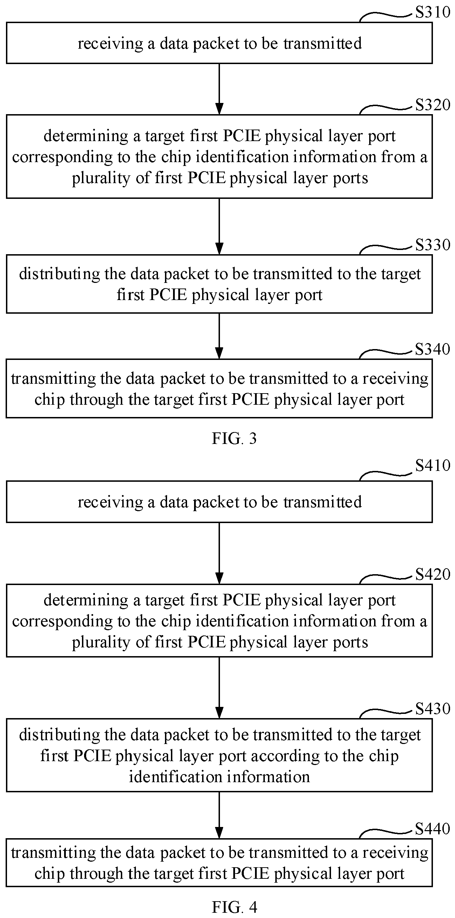

FIG. 3 illustrates a schematic flowchart of a data transmission method according to some embodiments of the disclosure.

According to some embodiments of the disclosure, the data transmission method illustrated in FIG. 3 may be applied to a chip that needs to perform the data transmission among the plurality of chips, that is, the transmitting chip, which is not limited herein. For example, the plurality of chips may be the plurality of control chips in the driving controller of the vehicle or the plurality of chips may be different driving controllers, which is not limited herein.

As illustrated in FIG. 3, the data transmission method may include the following steps: S310-S340.

S310, a data packet to be transmitted is received. The data packet to be transmitted includes data to be transmitted and chip identification information.

According to some embodiments of the disclosure, the data packet to be transmitted may be received through the user layer of the transmitting chip. The transmitting chip may be a chip for transmitting the data packet to be transmitted,
According to some embodiments, the data to be transmitted may be user-defined data that need to be transmitted to the receiving chip.

According to some embodiments, in terms of data types, the data to be transmitted may include chip configuration data of the receiving chip, a control instruction for the receiving chip, service data to be transmitted to the receiving chip, and the like. Correspondingly, the data packet to be transmitted corresponding to the chip configuration data may be called a configuration data packet, the data packet to be transmitted corresponding to the control instruction may be called a control data packet, and the data packet to be transmitted corresponding to the service data may be called a message data packet.

For the chip configuration data, it may be the power-on configuration data of the receiving chip, etc., and the configuration data of the chip type of the receiving chip. The configuration data of the chip type is used to configure the receiving chip as a working chip or a backup chip.

For the control instruction, it is used to control the receiving chip, for example, a cooling control instruction, a start instruction, a stop operation instruction, or the like of the receiving chip.

For the service data, it may be the service data to be migrated from the transmitting chip to the receiving chip during the data migration.

It should be noted that, through the above-mentioned different types of the data to be transmitted, the plurality of chips may be used to realize the data joint processing, some chips may be used to perform the disaster recovery processing on other chips, the master-slave control among the plurality of chips may be realized, or the like.

According to some embodiments, the chip identification information is used to uniquely identify the receiving chip of the data packet to be transmitted among the plurality of chips, for example, the port identity of the target PCIE physical layer port of the receiving chip or the chip identity of the receiving chip, which is not limited therein. The target first PCIE physical layer port may be a port interconnected with the transmitting chip among the plurality of first PCIE physical layer ports of the receiving chip.

S320, a target first PCIE physical layer port corresponding to the chip identification information is determined from a plurality of first PCIE physical layer ports. According to some embodiments of the disclosure, the target first PCIE physical layer port may be determined from the plurality of first PCIE physical layer ports of the transmitting chip through the protocol layer of the transmitting chip.

The plurality of first PCIE physical layer ports are interconnected with the plurality of chips in the one-to-one correspondence. It should be noted that, for the interconnection relationship among the plurality of first PCIE physical layer ports and the plurality of chips, reference should be made to the relevant description in the above embodiments of the disclosure in conjunction with FIG. 1, and details are not repeated herein.

According to some embodiments, if the chip identification information is the port identity of the target PCIE physical layer port of the receiving chip, the target first PCIE physical layer port corresponding to the target PCIE physical layer port may be determined according to the port identity.

According to some embodiments, if the chip identification information is the chip identity, the corresponding relationship among the plurality of first PCIE physical layer ports and the plurality of chip identities may be preset, so that according to the corresponding relationship, the PCIE physical layer port corresponding to the chip identification information may be determined. For example, continuing to take FIG. 1 as an example, the preset corresponding relationship preset in the protocol layer 120 may include: the first sub-relationship between the chip identity of chip C2 and the PCIE physical layer port 131, the second sub-relationship between the chip identity of chip C3 and the PCIE physical layer port 132, and the third sub-relationship between the chip identity of chip C4 and the PCIE physical layer port 133.

S330, the data packet to be transmitted are distributed to the target first PCIE physical layer port.

According to some embodiments of the disclosure, the data packet to be transmitted may be transmitted to the target first PCIE physical layer port of the transmitting chip through the protocol layer of the transmitting chip.

According to some embodiments, continuing to take FIG. 1 as an example, chip C1 may distribute the data packet to be transmitted to the PCIE physical layer port 133 after determining that the PCIE physical layer port 133 is the target first PCIE physical layer port.

According to some embodiments, the protocol layer may also detect an error on the physical link of the PCIE physical layer port, so as to correct the error-prone physical link to the logically error-free data link.

S340, the data packet to be transmitted is transmitted to a receiving chip through the target first PCIE physical layer port. The receiving chip is a chip interconnected with the target first PCIE physical layer port

According to some embodiments of the disclosure, the data packet to be transmitted may be transmitted to the target PCIE physical layer port of the receiving chip through the target first PCIE physical layer port of the transmitting chip. The target PCIE physical layer port may be a port among the plurality of first PCIE physical layer ports of the receiving chip, which is connected to the target first PCIE physical layer port of the transmitting chip.

According to some embodiments, continue to take FIG. 1 as an example, if the transmitting chip is chip C3, and the receiving chip is chip C2, the data packet to be transmitted may be transmitted to the PCIE physical layer port 132 of chip C2 through the PCIE physical layer port 133 of chip C3.

According to some embodiments, if the transmitting chip may not successfully transmit the data packet to be transmitted to the receiving chip, the transmitting chip may forward the data packet to be transmitted to the receiving chip through other chips.

Through the embodiments, in response to the target first PCIE physical layer port failure of the transmitting chip, the target PCIE physical layer port failure of the receiving chip, the abnormality of the transmission line between the target first PCIE physical layer port and the target PCIE physical layer port, or the like, the transmitting chip may not successfully transmit the data packet to be transmitted to the receiving chip, and the transmission of the data packet to be transmitted is realized by forwarding the data packet, which improves the data transmission stability.

Or, when the data packet to be transmitted is transmitted to the wrong PCIE physical layer port, such as when it is transmitted to the PCIE physical layer port of other chip except the receiving chip, it may be correctly transmitted to the receiving chip by forwarding, which improves the data transmission accuracy.

According to embodiments of the disclosure, the plurality of first PCIE physical layer ports may be interconnected with the plurality of chips in the one-to-one correspondence, and when the data transmission is performed, the PCIE physical layer port corresponding to the chip identification information in the data packet to be transmitted is determined. The data may be transmitted to the receiving chip through the PCIE physical layer port. The plurality of PCIE physical layer ports interconnected with the plurality of chips in the one-to-one correspondence may realize the direct and high-bandwidth mutual information transmission among the plurality of chips, improving the data transmission efficiency among the plurality of chips.

In addition, through the plurality of PCIE physical layer ports interconnected with the plurality of chips one to one, the data may be directly transmitted to the target chip, which may greatly improve the data transmission efficiency, reduce the utilization rate of the central processing unit (CPU) resources of the chip, and realize the high-speed interconnection of chips.

In addition, through the embodiments of the disclosure, even if a problem occurs in a certain chip among the plurality of chips, it will not affect the mutual data transmission among other chips, which improves the data transmission stability.

According to some embodiments, before S330, the data transmission method further includes step A1 and step A2.

Step A1, a data type of the data packet to be transmitted is determined.

In step A1, the data type of the data packet to be transmitted may be determined through the protocol layer of the transmitting chip.

According to some embodiments, for the data type, reference should be made to the relevant description of the data type in S310.

Step A2, the data to be transmitted are encapsulated according to an encapsulating format corresponding to the data type to obtain an encapsulated data packet to be transmitted.

In step A1, the encapsulating processing may be performed through the protocol layer of the transmitting chip.

Correspondingly, S330 may include distributing the encapsulated data packet to be transmitted to the target first PCIE physical layer port. In detail, the encapsulated data packet to be transmitted may be distributed to the target first PCIE physical layer port through the protocol layer of the transmitting chip.

According to some embodiments, if the protocol layer includes a transaction layer and a plurality of data link layers corresponding to the plurality of first PCIE physical layer ports one to one, step A1 and step A2 may be implemented through the transaction layer. After the encapsulated data packet to be transmitted is distributed to the target data link layer corresponding to the target first PCIE physical layer port through the transaction layer, the target data link layer continues to transmit the encapsulated packet to be transmitted down to the target first PCIE physical layer port.

Through the embodiments, different types of data packets to be transmitted may be encapsulated in the specific formats, so that the format redefinitions of various types of data packets may be realized.

FIG. 4 illustrates a schematic flowchart of another data transmission method according to some embodiments of the disclosure. The embodiments of the disclosure are optimized on the basis of the foregoing embodiments, and the embodiments of the disclosure may be combined with various optional solutions in the foregoing one or more embodiments.

According to some embodiments of the disclosure, the method illustrated in FIG. 4 may be applied to a chip that needs to perform the data transmission among the plurality of chips, that is, the transmitting chip, which is not limited herein. For example, the plurality of chips may be the plurality of control chips in the driving controller of the vehicle or the plurality of chips may be different driving controllers, which is not limited herein.

As illustrated in FIG. 4, the data transmission may include the following steps: S410-S440.

S410, a data packet to be transmitted is received. The data packet to be transmitted includes data to be transmitted and chip identification information.

For S410, reference may be made to the content of S310, which will not be repeated herein.

S420, a target first PCIE physical layer port corresponding to the chip identification information is determined from a plurality of first PCIE physical layer ports. The plurality of first PCIE physical layer ports and the plurality of chips are interconnected one to one.

According to embodiments of the disclosure, the target first PCIE physical layer port corresponding to the chip identification information may be determined through the transaction layer of the transmitting chip.

For S420, reference may be made to the content of S320, which will not be repeated herein.

S430, the data packet to be transmitted is distributed to the target first PCIE physical layer port according to the chip identification information.

According to embodiments of the disclosure, the data to be transmitted may be distributed to the target first PCIE physical layer port through the transaction layer and the target data link layer. In detail, the data packet to be transmitted may be distributed to the target data link layer corresponding to the target first PCIE physical layer port according to the chip identification information through the transaction layer of the transmitting chip. The data packet to be transmitted may be transmitted to the target first PCIE physical layer port through the target data link layer of the transmitting chip.

According to some embodiments, taking FIG. 2 as an example, if the transmitting chip is chip C1 and the receiving chip is chip C3, the data packet to be transmitted may be distributed to the data link layer 1212 of chip C1 through the transaction layer 122 of chip C 1.

After receiving the data packet to be transmitted, the data link layer 1212 of chip C1 may transmit it to the Physical layer 1322 of the PCIE physical layer port 132 of chip C1.

S440, the data packet to be transmitted is transmitted to the receiving chip through the target first PCIE physical layer port. The receiving chip is a chip interconnected with the target first PCIE physical layer port.

It should be noted that S440 is similar to S340, and reference may be made to the related content of S340, which will not be repeated herein.

According to embodiments of the disclosure, the plurality of first PCIE physical layer ports may be interconnected with the plurality of chips in the one-to-one correspondence, and when the data transmission is performed, the PCIE physical layer port corresponding to the chip identification information in the data packet to be transmitted is determined. The data may be transmitted to the receiving chip through the PCIE physical layer port. The plurality of PCIE physical layer ports interconnected with the plurality of chips in the one-to-one correspondence may realize the direct and high-bandwidth mutual information transmission among the plurality of chips, improving the data transmission efficiency among the plurality of chips.

According to some embodiments, before S430, the data transmission method further includes step B 1.

Step B 1, a data bit width of the data packet to be transmitted is aligned with a data bit width of the target first PCIE physical layer port to obtain an aligned data packet to be transmitted.

According to some embodiments of the disclosure, the data bit width alignment may be performed on the data packet to be transmitted through the target data link layer of the transmitting chip. The data bit width of the aligned data packet to be transmitted is the same as the data bit width of the target first PCIE physical layer port.

Correspondingly, S430 may include: transmitting the aligned data packet to be transmitted to the target first PCIE physical layer port. In detail, the aligned data packet to be transmitted may be transmitted to the target first PCIE physical layer port through the target data link layer of the transmitting chip.

Through some embodiments, when the data bit widths of the transaction layer and the PCIE physical layer are different, the aligned data packet to be transmitted may be processed by the PCIE physical layer port by means of data bit width alignment.

According to some embodiments, the data transmission method further includes step C1 and step C2.

Step C1, an error on physical links of the plurality of first PCIE physical layer ports is detected respectively.

In step C1, if the protocol layer includes a plurality of data link layers, and each of the data link layers corresponds to the one PCIE physical layer port, the plurality of data link layers may be utilized to detect errors on the physical links of the respective corresponding PCIE physical layer ports.

Step C2, in response to detecting an error on a physical link of any PCIE physical layer port, an error-prone physical link is corrected into an error-free data link.

In step C2, when it is detected by any data link layer that there is an error on the physical link of the corresponding PCIE physical layer port, the physical link with the error is corrected to the error-free data link by any data link layer.

Through some embodiments, the error correction is performed through the error monitoring, so that the link according to each PCIE physical layer may appear as error-free links to the transaction layer.

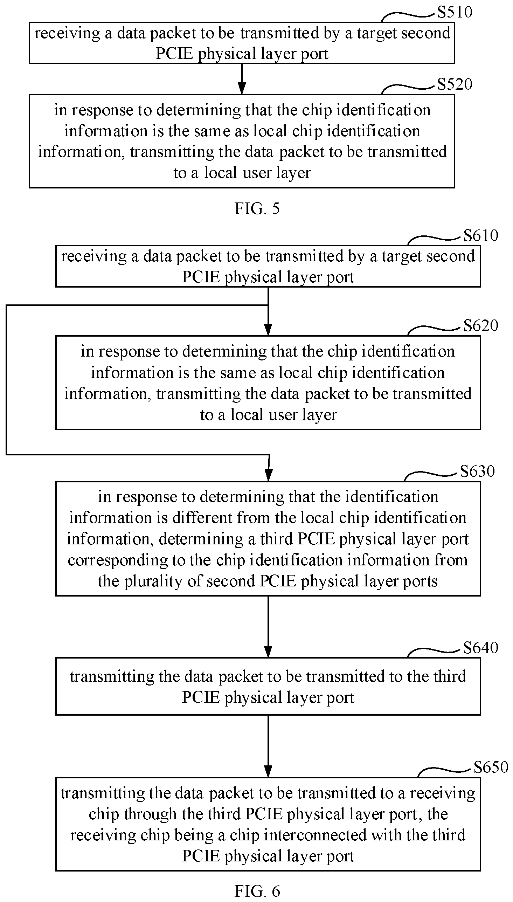

FIG. 5 illustrates a schematic flowchart of another data transmission method according to some embodiments of the disclosure.

According to some embodiments of the disclosure, the data transmission method illustrated in FIG. 5 may be applied to a target chip that receives data to be transmitted among the plurality of chips, which is not limited herein. For example, the plurality of chips may be the plurality of control chips in the driving controller of the vehicle or the plurality of chips may be chips in different driving controllers, which is not limited herein.

As illustrated in FIG. 5, the data transmission method may include the following steps: S510-S520.

S510, a data packet to be transmitted is received by a target second PCIE physical layer port. The target second PCIE physical layer port is a port interconnected with a transmitting chip in a plurality of second PCIE physical layer ports. The plurality of second PCIE physical layer ports and a plurality of chips are interconnected one to one. The data packet to be transmitted includes data to be transmitted and chip identification information.

According to some embodiments of the disclosure, the target chip may receive the data packet to be transmitted through its own target second PCIE physical layer port.

It should be noted that, for S510, reference may be made to the relevant description of the foregoing the embodiments of the disclosure, and details are not repeated herein.

According to some embodiments, continue to take FIG. 1 as an example, if the transmitting chip is chip C2, and the receiving chip is chip C1, the receiving chip C1 may receive the data packet to be transmitted which is transmitted by the PCIE physical layer port 131 of the transmitting chip C2 through its own PCIE physical layer port 131.

S520, in response to determining that the chip identification information is the same as local chip identification information, the data packet to be transmitted is transmitted to a local user layer.

According to some embodiments of the disclosure, the data packet to be transmitted may be transmitted to the local user layer of the target chip under the condition that the chip identification information is determined to be the same as the local chip identification information through the protocol layer of the target chip.

For the chip identification information, reference may be made to the description of the chip identification information in the foregoing embodiments, which will not be repeated herein.

According to some embodiments, if the chip identification information is the chip identity of the receiving chip, the local chip identification information may be the chip identity of the target chip, and if the local chip identification information is consistent with the chip identity, it may be determined that the target chip is the receiving chip of the data packet to be transmitted. The receiving chip is a target receiver of the data to be transmitted, specified by the user through the user layer of the transmitting chip.

According to some embodiments, if the chip identification information is the port identity of the target PCIE physical layer port, it may be determined whether there is a port identity, which is the same as the port identity of the target second PCIE physical layer port, in port identities of the plurality of second PCIE physical layer ports of the target chip, If there is the same port identity, it is determined that the chip identifier information is the same as the local chip identifier information, and accordingly it is determined that the target chip is the receiving chip of the data packet to be transmitted.

According to some embodiments, the data packet to be transmitted may be transmitted to the local user layer of the target chip by the protocol layer when the chip identification information is the same as the local chip identification information. Furthermore, the data packet to be transmitted may be transmitted to the memory of the target chip.

According to some embodiments of the disclosure, the plurality of second PCIE physical layer ports may be interconnected to the plurality of chips in the one-to-one correspondence, and when the data transmission is performed, the data transmitted by the transmitting chip may be directly obtained through the PCIE physical layer port directly interconnected with the transmitting chip. The plurality of PCIE physical layer ports interconnected with the plurality of chips in the one-to-one correspondence may realize the direct and high-bandwidth mutual information transmission among the plurality of chips, improving the data transmission efficiency among the plurality of chips.

According to some embodiments, if the protocol layer includes a transaction layer and a plurality of data link layers, and each data link layer corresponds to a PCIE physical layer port, before S520, the data transmission method further includes steps D1 and D2.

Step D 1, the data packet to be transmitted is transmitted to the transaction layer through the data link layer corresponding to the target second PCIE physical layer port.

Step D2, it is judged whether the chip identification information is the same as the local chip identification information through the transaction layer.

According to some embodiments, for step D2, reference should be made to the content of S520, which will not be repeated herein.

Through some embodiments, the information to be transmitted may be correctly transmitted to the receiving chip by judging whether the chip identification information is the same as the local chip identification information, thereby improving the data transmission accuracy.

According to some embodiments, before step S520, the data transmission method further includes step D3.

Step D3, a data bit width of the data packet to be transmitted is aligned with a data bit width of a
In step D3, the data bit width of the data packet to be transmitted may be aligned with the data bit width of the transaction layer through the data link layer corresponding to the target second PCIE physical layer port, and the aligned data to be transmitted may be obtained.

It should be noted that, the data bit width of the aligned data to be transmitted may be the same as the data bit width of the transaction layer of the target chip.

Correspondingly, step S520 may include: in response to determining that the chip identification information is the same as the local chip identification information, transmitting the aligned data packet to be transmitted to the transaction layer.

In detail, the aligned data packet to be transmitted may be transmitted to the transaction layer through the data link layer corresponding to the target second PCIE physical layer port. The transaction layer transmits the aligned data packet to be transmitted to the local user layer of the target chip when judging that the chip identification information is the same as the local chip identification information.

Through some embodiments, when the data bit widths of the transaction layer and the PCIE physical layer are different, the aligned data packet to be transmitted may be processed by the transaction layer by means of data bit width alignment.

According to some embodiments, before S520, the data transmission method further includes step E1 and step E2.

Step E1, a data type of the data packet to be transmitted is determined.

In step E1, the data type of the data packet to be transmitted may be determined through the protocol layer of the target chip.

Step E2, the data to be transmitted is de-encapsulated according to a de-encapsulating format corresponding to the data type, to obtain de-encapsulated data to be transmitted.

In step E1, de-encapsulating may be performed through the protocol layer of the target chip.

It should be noted that, for step E1 and step E2, reference may be made to the relevant description of step A1 and step A2, which will not be repeated herein.

The data packet to be transmitted is sent to the user layer, including: distributing the de-encapsulated data packet to be transmitted to the local user layer.

In detail, the data packet to be transmitted may be transmitted to the local user layer of the target chip through the protocol layer of the target chip.

Through some embodiments, different types of data packets to be transmitted may be de-encapsulated in the specific formats, so that the format redefinitions of various types of data packets may be realized.

FIG. 6 illustrates a schematic flowchart of another data transmission method according to some embodiments of the disclosure. The embodiments of the disclosure are optimized on the basis of the foregoing embodiments, and the embodiments of the disclosure may be combined with various optional solutions in the foregoing one or more embodiments.

According to some embodiments of the disclosure, the data transmission method illustrated in FIG. 6 may be applied to the target chip that receives the data packet to be transmitted among the plurality of chips, which is not limited herein. For example, the plurality of chips may be the plurality of control chips in the driving controller of the vehicle or chips in different driving controllers, which is not limited herein.

As illustrated in FIG. 6, the data transmission method may include the following steps: S610-S650.

S610, a data packet to be transmitted is received by a target second PCIE physical layer port. The target second PCIE physical layer port is a port interconnected with a transmitting chip in a plurality of second PCIE physical layer ports. The plurality of second PCIE physical layer ports and a plurality of chips are interconnected one to one. The data packet to be transmitted includes data to be transmitted and chip identification information.

S610 is similar to S510, reference may be made to the content of S510, and details are not repeated herein.

S620, in response to determining that the chip identification information is the same as local chip identification information, the data packet to be transmitted is transmitted to a local user layer.

S620 is similar to S520, reference may be made to the content of S520, and details are not repeated herein.

S630, in response to determining that the identification information is different from the local chip identification information, a third PCIE physical layer port corresponding to the chip identification information is determined from the plurality of second PCIE physical layer ports.

According to some embodiments of the disclosure, the third PCIE physical layer port corresponding to the chip identification information is determined through the protocol layer of the target chip among the plurality of second PCIE physical layer ports.

According to some embodiments, when it is determined that the chip identification information corresponds to other chip except the target chip, the third PCIE physical layer port interconnected with other chip may be determined.

S640, the data packet to be transmitted is transmitted to the third PCIE physical layer port.

According to some embodiments of the disclosure, the data packet to be transmitted may be transmitted to the third PCIE physical layer port through the protocol layer of the target chip.

Continuing to take FIG. 1 as an example, if the transmitting chip is chip C3, the target chip is chip C1, and the receiving chip is chip C2, after chip C1 receives the data packet to be transmitted through the PCIE physical layer port 132, and if the receiving chip is found to be chip C2, the transmission data packet may be distributed to the PCIE physical layer port 131 of chip C1, so as to forward the data packet to be transmitted to chip C2.

S650, the data packet to be transmitted is transmitted to a receiving chip through the third PCIE physical layer port, in which the receiving chip is a chip interconnected with the third PCIE physical layer port.

S650 is similar to S340, reference may be made to the related content of S340, and details are not repeated herein.

According to the data transmission method, the data transmission apparatus, the data transmission device, the medium, the computer program product, and the computer program according to the embodiments of the disclosure, the plurality of second PCIE physical layer ports may be interconnected to the plurality of chips in the one-to-one correspondence, and when the data transmission is performed, the data transmitted by the transmitting chip may be directly obtained through the PCIE physical layer port directly interconnected with the transmitting chip. The plurality of PCIE physical layer ports interconnected with the plurality of chips in the one-to-one correspondence may realize the direct and high-bandwidth mutual information transmission among the plurality of chips, improving the data transmission efficiency among the plurality of chips.

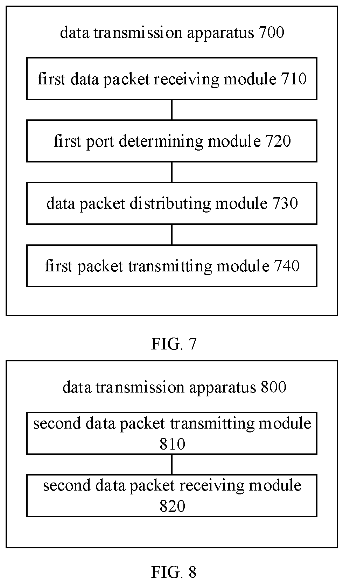

FIG. 7 illustrates a schematic block diagram of a data transmission apparatus according to some embodiments of the disclosure.

According to some embodiments of the disclosure, the data transmission apparatus illustrated in FIG. 7 may be applied to a transmitting chip among the plurality of interconnected chips, which is not limited herein.

As illustrated in FIG. 7, the data transmission apparatus 700 may include a first data packet receiving module 710, a first port determining module 720, a data packet distributing module 730, and a first packet transmitting module 740.

The first data packet receiving module 710 is configured to receive a data packet to be transmitted, in which the data packet to be transmitted includes data to be transmitted and chip identification information.

The first port determining module 720 is configured to determine a target first PCIE physical layer port corresponding to the chip identification information from a plurality of first PCIE physical layer ports, in which the plurality of first PCIE physical layer ports and a plurality of chips are interconnected one to one.

The data packet distributing module 730 is configured to distribute the data packet to be transmitted to the target first PCIE physical layer port.

The first packet transmitting module 740 is configured transmit the data packet to be transmitted to a receiving chip through the target first PCIE physical layer port, in which the receiving chip is a chip interconnected with the target first PCIE physical layer port.

According to embodiments of the disclosure, the plurality of first PCIE physical layer ports may be interconnected with the plurality of chips in the one-to-one correspondence, and when the data transmission is performed, the PCIE physical layer port corresponding to the chip identification information in the data packet to be transmitted is determined. The data may be transmitted to the receiving chip through the PCIE physical layer port. The plurality of PCIE physical layer ports interconnected with the plurality of chips in the one-to-one correspondence may realize the direct and high-bandwidth mutual information transmission among the plurality of chips, improving the data transmission efficiency among the plurality of chips.

According to some embodiments, the first data packet receiving module 710 is configured to: determine the target first PCIE physical layer port corresponding to the chip identification information from the plurality of first PCIE physical layer ports.

The data packet distributing module 730 is configured to distribute the data packet to be transmitted to the target first PCIE physical layer port according to the chip identification information.

According to some embodiments, the data transmission apparatus 700 may further include a data alignment module.

The data alignment module is configured to align a data bit width of the data packet to be transmitted with a data bit width of the target first PCIE physical layer port to obtain an aligned data packet to be transmitted.

The above-mentioned data transmission unit may be specifically configured to transmit the aligned data packet to be transmitted to the target first PCIE physical layer port.

According to some embodiments, the data transmission apparatus 700 may further include a data type determination module and an encapsulating module.

The data type determination module may be configured to determine a data type of the data packet to be transmitted.

The encapsulating module may be configured to encapsulate the data to be transmitted according to an encapsulating format corresponding to the data type to obtain an encapsulated data packet to be transmitted.

The data packet distributing module 730 is configured to distribute the encapsulated data packet to be transmitted to the target first PCIE physical layer port.

According to some embodiments, the data transmission apparatus 700 may further include an error detecting module and an error correction module.

The error detecting module may be configured to detect respectively an error on physical links of the plurality of first PCIE physical layer ports.

The error correction module may be configured to in response to detecting an error on a physical link of any PCIE physical layer port, correct an error-prone physical link into an error-free data link.

It should be noted that the data transmission apparatus 700 illustrated in FIG. 7 may execute each step in the method embodiments illustrated in FIG. 3 to FIG. 4, and realize each process and effect, which will not be described herein.

FIG. 8 illustrates a schematic block diagram of another data transmission apparatus according to some embodiments of the disclosure.

According to some embodiments of the disclosure, the data transmission apparatus illustrated in FIG. 8 may be applied to a target chip among the plurality of interconnected chips, which is not limited herein.

As illustrated in FIG. 8, the data transmission apparatus 800 may include a second data packet transmitting module 810 and a second data packet receiving module 820.

The second data packet transmitting module 810 is configured to receive a data packet to be transmitted by a target second PCIE physical layer port, in which the target second PCIE physical layer port is a port interconnected with a transmitting chip in a plurality of second PCIE physical layer ports, the plurality of second PCIE physical layer ports and a plurality of chips are interconnected one to one, and the data packet to be transmitted includes data to be transmitted and chip identification information.

The second data packet receiving module 820 is configured to, in response to determining that the chip identification information is the same as local chip identification information, transmit the data packet to be transmitted to a local user layer.

According to some embodiments of the disclosure, the plurality of second PCIE physical layer ports may be interconnected to the plurality of chips in the one-to-one correspondence, and when the data transmission is performed, the data transmitted by the transmitting chip may be directly obtained through the PCIE physical layer port directly interconnected with the transmitting chip. The plurality of PCIE physical layer ports interconnected with the plurality of chips in the one-to-one correspondence may realize the direct and high-bandwidth mutual information transmission among the plurality of chips, improving the data transmission efficiency among the plurality of chips.

According to some embodiments, the data transmission apparatus 800 may further include a second port determining module, a data packet transmission module, and a third data packet transmitting module.

The second port determining module may be configured to, in response to determining that the identification information is different from the local chip identification information, determine a third PCIE physical layer port corresponding to the chip identification information from the plurality of second PCIE physical layer ports.

The data packet transmission module may be configured to transmit the data packet to be transmitted to the third PCIE physical layer port.

The third data packet transmitting module may be configured to transmit the data packet to be transmitted to a receiving chip through the third PCIE physical layer port, in which the receiving chip is a chip interconnected with the third PCIE physical layer port.

According to some embodiments, the data transmission apparatus 800 may further include a data alignment module.

The data alignment module may be configured to align a data bit width of the data packet to be transmitted with a data bit width of a transaction layer to obtain aligned data to be transmitted through the data link layer corresponding to the second PCIE physical layer port of the target.
in response to determining that the chip identification information is the same as the local chip identification information, transmit the aligned data packet to be transmitted to the transaction layer.

According to some embodiments, the data transmission apparatus 800 may further include a data type determination module and a de-encapsulating module.

The data type determination module may be configured to determine a data type of the data packet to be transmitted.

The de-encapsulating module may be configured to de-encapsulate the data to be transmitted according to a de-encapsulating format corresponding to the data type, to obtain de-encapsulated data to be transmitted.

The second data packet receiving module 820 is specifically configured to: distribute the de-encapsulated data packet to be transmitted to the local user layer.

It should be noted that the data transmission apparatus 800 illustrated in FIG. 8 may execute each step in the method embodiments illustrated in FIG. 5 to FIG. 6, and realize each process and effect, which will not be described herein.

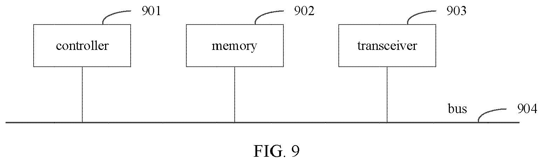

FIG. 9 is a schematic block diagram of a data transmission device according to some embodiments of the disclosure.

As illustrated in FIG. 9, the data transmission device may include a controller 901 and a memory 902 storing computer program instructions.

In detail, the above-mentioned processor 901 may include a central processing unit (CPU), or an application specific integrated circuit (ASIC), or may be configured to implement one or more integrated circuits for implementing the embodiments of the disclosure.

The memory 902 may include a mass storage for information or instructions. By way of example and not limitation, the memory 902 may include a hard disk drive (HDD), a floppy disk drive, a flash memory, an optical disk, a magneto-optical disk, a magnetic tape, or a universal serial bus (USB) drive, or a combination of two or more thereof. The memory 902 may include a removable or non-removable (or fixed) medium where appropriate. The memory 902 may be internal or external to the integrated gateway device where appropriate. According to some embodiments, the memory 902 is a non-volatile solid-state memory. According to some embodiments, the memory 902 includes a read-only memory (ROM). The ROM may be a mask-programmed ROM, a programmable ROM (PROM), an electrical programmable PROM (EPROM), an electrically erasable PROM (EEPROM), an electrically alterable ROM (EAROM), a flash memory, or a combination of two or more thereof.

The controller 901 performs the steps of the data transmission method according to the embodiments of the disclosure by reading and executing the computer program instructions stored in the memory 902.

For example, the data transmission device may further include a transceiver 903 and a bus 904. As illustrated in FIG. 9, the controller 901, the memory 902, and the transceiver 903 are connected through the bus 904 to complete mutual communication.

The bus 904 includes hardware, software, or both. By way of example and not limitation, the bus may include an accelerated graphics port (AGP) or other graphics bus, an enhanced industry standard architecture (EISA) bus, a front side bus (FSB), a hyper transport (HT) interconnection, an industrial standard architecture (ISA) bus, an InfiniBand Interconnection, a low pin count (LPC) bus, a memory bus, a micro channel architecture (MCA) bus, a peripheral component interconnect (PCI) bus, a PCI-express (PCI-X) bus, a serial advanced technology attachment (SATA) bus, a video electronics standards association local bus (VLB), or other suitable bus, or a combination of two or more thereof. The bus 904 may include one or more buses, where appropriate. Although embodiments of the disclosure describe and illustrate a particular bus, this disclosure contemplates any suitable bus or interconnect.

According to some embodiments of the disclosure, a computer-readable storage medium is also provided. The storage medium may store a computer program, and when the computer program is performed by the processor, the processor performs the data transmission method according to embodiments of the disclosure.

The above-mentioned storage medium may include, for example, the memory 902 including the computer program instructions. The above instructions may be executed by the processor 902 of the data transmission device to complete the data transmission method according to some embodiments of the disclosure. According to some embodiments of the disclosure, the storage medium may be a non-transitory computer-readable storage medium, for example, the non-transitory computer-readable storage medium may be a ROM, a random access memory (RAM), a compact disc ROM (CD-ROM), a magnetic tape, a floppy disk, an optical data storage device, etc.

According to some embodiments of the disclosure, a computer program product is also provided. The computer program product includes a computer program, and when the computer program is performed by a processor, the data transmission method according to some embodiments of the disclosure is performed.

According to some embodiments of the disclosure, a computer program is also provided. The computer program includes a computer program code. When the computer program code runs on the computer, the computer is caused to execute the data transmission method according to some embodiments of the disclosure.

It should be noted that the foregoing explanations of the embodiments of the data transmission method are also applicable to the data transmission apparatus, the data transmission device, the non-transitory computer-readable storage medium, the computer program product, and the computer program according to the embodiments of the disclosure, and details are not repeated herein.

It should be noted that in this article, relative terms such as "first" and "second" are only used to distinguish one entity or operation from another entity or operation, and do not necessarily require or imply these entities or operations have the actual relationship or order. Moreover, the term "includes" is intended to cover a non-exclusive inclusion such that a process, a method, an article, or an apparatus including a set of elements includes not only those elements but also other elements not expressly listed, or elements inherent in the process, the method, the article, or the apparatus.

The above are only specific implementation manners of the disclosure, so that those skilled in the art may understand or implement the disclosure. Various modifications to these embodiments will be readily apparent to those skilled in the art, and the general principles defined herein may be implemented in other embodiments without departing from the spirit or scope of the disclosure. Therefore, the disclosure will not be limited to the embodiments described herein, but is to be accorded the widest scope consistent with the principles and novel features disclosed herein.

## Claims

1. A data transmission method, comprising:
receiving a data packet to be transmitted, the data packet to be transmitted comprising data to be transmitted and chip identification information;
determining a target first peripheral component interconnect express (PCIE) physical layer port corresponding to the chip identification information from a plurality of first PCIE physical layer ports, the plurality of first PCIE physical layer ports and a plurality of chips being interconnected one to one;
distributing the data packet to be transmitted to the target first PCIE physical layer port; and
transmitting the data packet to be transmitted to a receiving chip through the target first PCIE physical layer port, the receiving chip being a chip interconnected with the target first PCIE physical layer port.

2. The method according to claim 1, wherein,
determining the target first PCIE physical layer port corresponding to the chip identification information from the plurality of PCIE physical layer ports comprises:
determining the target first PCIE physical layer port corresponding to the chip identification information from the plurality of first PCIE physical layer ports;
distributing the data packet to be transmitted to the target first PCIE physical layer port comprises:
distributing the data packet to be transmitted to the target first PCIE physical layer port according to the chip identification information.

3. The method according to claim 2, before distributing the data packet to be transmitted to the target first PCIE physical layer port according to the chip identification information, further comprising:
aligning a data bit width of the data packet to be transmitted with a data bit width of the target first PCIE physical layer port to obtain an aligned data packet to be transmitted;
distributing the data packet to be transmitted to the target first PCIE physical layer port according to the chip identification information comprises:
transmitting the aligned data packet to be transmitted to the target first PCIE physical layer port.

4. The method according to any one of claims 1 to 3, before distributing the data packet to be transmitted to the target first PCIE physical layer port, further comprising:
determining a data type of the data packet to be transmitted;
encapsulating the data to be transmitted according to an encapsulating format corresponding to the data type to obtain an encapsulated data packet to be transmitted;
distributing the data packet to be transmitted to the target first PCIE physical layer port comprises:
distributing the encapsulated data packet to be transmitted to the target first PCIE physical layer port.

5. The method according to any one of claims 1 to 4, further comprising:
detecting respectively an error on physical links of the plurality of first PCIE physical layer ports; and
in response to detecting an error on a physical link of any PCIE physical layer port, correcting an error-prone physical link into an error-free data link.

6. A data transmission method, comprising:
receiving a data packet to be transmitted by a target second PCIE physical layer port, the target second PCIE physical layer port being a port interconnected with a transmitting chip in a plurality of second PCIE physical layer ports, the plurality of second PCIE physical layer ports and a plurality of chips being interconnected one to one, the data packet to be transmitted comprising data to be transmitted and chip identification information; and
in response to determining that the chip identification information is the same as local chip identification information, transmitting the data packet to be transmitted to a local user layer.

7. The method according to claim 6, after receiving the data packet to be transmitted by the target second PCIE physical layer port, further comprising:
in response to determining that the identification information is different from the local chip identification information, determining a third PCIE physical layer port corresponding to the chip identification information from the plurality of second PCIE physical layer ports;
transmitting the data packet to be transmitted to the third PCIE physical layer port; and
transmitting the data packet to be transmitted to a receiving chip through the third PCIE physical layer port, the receiving chip being a chip interconnected with the third PCIE physical layer port.

8. The method according to claim 7, before transmitting the data packet to be transmitted to the local user layer, further comprising:
aligning a data bit width of the data packet to be transmitted with a data bit width of a transaction layer to obtain aligned data to be transmitted;
in response to determining that the chip identification information is the same as the local chip identification information, transmitting the data packet to be transmitted to the local user layer comprises:
in response to determining that the chip identification information is the same as the local chip identification information, transmitting the aligned data packet to be transmitted to the transaction layer.

9. The method according to any one of claims 6 to 8, before transmitting the data packet to be transmitted to the local user layer, further comprising:
determining a data type of the data packet to be transmitted;
de-encapsulating the data to be transmitted according to a de-encapsulating format corresponding to the data type, to obtain de-encapsulated data to be transmitted;
transmitting the data packet to be transmitted to the user layer comprises:
distributing the de-encapsulated data packet to be transmitted to the local user layer.

10. A data transmission apparatus, comprising:
a first data packet receiving module, configured to receive a data packet to be transmitted, the data packet to be transmitted comprising data to be transmitted and chip identification information;
a first port determining module, configured to determine a target first PCIE physical layer port corresponding to the chip identification information from a plurality of first PCIE physical layer ports, the plurality of first PCIE physical layer ports and a plurality of chips being interconnected one to one;
a data packet distributing module, configured to distribute the data packet to be transmitted to the target first PCIE physical layer port; and
a first packet transmitting module, configured transmit the data packet to be transmitted to a receiving chip through the target first PCIE physical layer port, the receiving chip being a chip interconnected with the target first PCIE physical layer port.

11. A data transmission apparatus, comprising:
a second data packet transmitting module, configured to receive a data packet to be transmitted by a target second PCIE physical layer port, the target second PCIE physical layer port being a port interconnected with a transmitting chip in a plurality of second PCIE physical layer ports, the plurality of second PCIE physical layer ports and a plurality of chips being interconnected one to one, the data packet to be transmitted comprising data to be transmitted and chip identification information; and
a second data packet receiving module, configured to, in response to determining that the chip identification information is the same as local chip identification information, transmit the data packet to be transmitted to a local user layer.

12. A data transmission device, comprising:
a processor; and
a memory for storing executable instructions;
wherein the processor is configured to read the executable instruction from the memory and execute the executable instruction to perform the data transmission method according to any one of claims 1-5 or 6-9.

13. A computer-readable storage medium, for storing a computer program, wherein when the computer program is executed by a processor, the processor performs the data transmission method according to any one of claims 1-5 or 6-9.

14. A computer program product, comprising a computer program, wherein when the computer program is executed by a processor, the processor performs the data transmission method according to any one of claims 1-5 or 6-9.

15. A computer program, comprising computer program code, wherein when the computer program code runs on a computer, the computer is caused to perform the data transmission method according to any one of claims 1 to 5 or 6 to 9.
